# EUROPEAN PATENT SPECIFICATION

(11) **EP 1 125 806 B1**
(45) Date of publication and mention of the grant of the patent: **13.07.2005**
(21) Application number: 00200620.3
(22) Date of filing: 18.02.2000
(51) Int. Cl.: B60S 1/34

(54) **Windscreen wiper device**
Scheibenwischervorrichtung
Dispositif d'essuie-glace

(43) Date of publication of application: 22.08.2001
(73) Proprietor: Federal-Mogul S.A., 6790 Aubange (BE)
(72) Inventor: Boland, Xavier, 6790 Aubange (BE)
(74) Representative: Hooiveld, Arjen Jan Winfried

(56) References cited:
- DE-A- 3 331 311
- FR-A- 2 499 920
- US-A- 4 615 067
- PATENT ABSTRACTS OF JAPAN vol. 011, no. 213 (M-605), & JP 62 028534 A

## Description

The invention relates to a windscreen wiper device comprising an oscillating arm and a frame connected thereto for receiving a wiper blade, which arm includes a mounting part and a swivelling part which is pivotally connected about a pivot axis to the mounting part at a first end and which is connected to the frame at a second end, wherein at least one pressure spring is disposed in the swivelling part, which pressure spring engages both the swivelling part and the mounting part.

Such a windscreen wiper device is known from German patent No. 33 31 311 (SWF Auto-Electric GmbH). The frame of this prior art windscreen wiper device consists of a first yoke, which is pivotally connected to the oscillating arm about a pivot axis and which functions as a carrier of two second yokes. These latter yokes in turn function as carriers of two third yokes, whilst all yokes are pivot-mounted in their respective carriers. The rubber wiper blade is accommodated between claws of the third yokes. The oscillating arm consists of the mounting part, which is mounted on a rotary drive shaft so as to impart the oscillating movement to the arm, and also of the swivelling part, which is pivoted to the mounting part. Said swivelling part is of U-shaped cross-section, and consequently includes an internal channel which houses the pressure spring, which engages both the mounting part and the swivelling part. The pressure spring provides a pressure force on the rubber wiper blade, so as to ensure that an effective wiping pattern is realized under all circumstances. It is noted that this prior art windscreen wiper device uses two small pressure springs lying side by side, so that the oscillating arm, in particular the swivelling part thereof, can be made less robust (i.e. less high) than with the prior art windscreen wiper devices, which have only one large pressure spring. It will be understood that, in particular from an aesthetic point of view, the oscillating arm must preferably be as low as possible.

One drawback of the windscreen wiper device as known from the aforesaid German patent publication is the fact that the use of two pressure springs is undesirable for economic reasons; not only must two separate pressure springs as well as the special hook eye-shaped parts associated therewith be manufactured, but it has also become furthermore apparent in practice that the assembly of the various parts takes a disproportionate amount of time.

The object of the invention is to provide a windscreen wiper device wherein the aforesaid drawbacks of the prior art are overcome, i.e. wherein the oscillating arm has an aesthetically acceptable shape with a low height, whilst it is not necessary to use a multitude of different (spring) parts.

In order to accomplish that objective, a windscreen wiper device of the kind referred to in the introduction is according to the invention characterized in that the pressure spring is a coil spring having non-circular windings. In a preferred variant, a coil spring of substantially elliptical or rectangular cross-section is used. As a result of this the arm, that is, in particular the swivelling part thereof, can be designed to have a low height, whilst production and assembly can take place in a simple and quick manner.

In one preferred embodiment of a windscreen wiper device according to the invention the length of the substantially elliptical or rectangular cross-section varies between 8 to 30 mm, particularly between 10 to 20 mm, whereas its width varies between 5 to 15 mm, preferably between 7 to 10 mm. This results in a flat arm having an attractive shape without doing harm to the function of such a flat coil spring.

In another preferred embodiment of a windscreen wiper device according to the invention, the coil spring is disposed in an internal channel of the swivelling part, which channel is of substantially U-shaped cross-section.

In another preferred embodiment of windscreen wiper device according to the invention, the coil spring includes hook means formed in one piece therewith.

The invention also relates to an oscillating arm including a mounting part and a swivelling part which is pivotally connected about a pivot axis to the mounting part at a first end and wherein at least one pressure spring is disposed on the swivelling part, which pressure spring engages both the swivelling part and the mounting part, and wherein the pressure spring is a coil spring having non-circular windings, which is obviously suitable for use in a windscreen wiper device according to the invention.

The invention will be explained in more detail with reference to figures illustrated in a drawing, wherein:
- Figure 1 is a perspective view of a windscreen wiper construction according to the invention;
- Figure 2 is a schematic, perspective view of a detail of Figure 1; and
- Figures 3 and 4 are schematic, perspective views of various preferred variants of a coil spring having non-circular windings according to the invention.

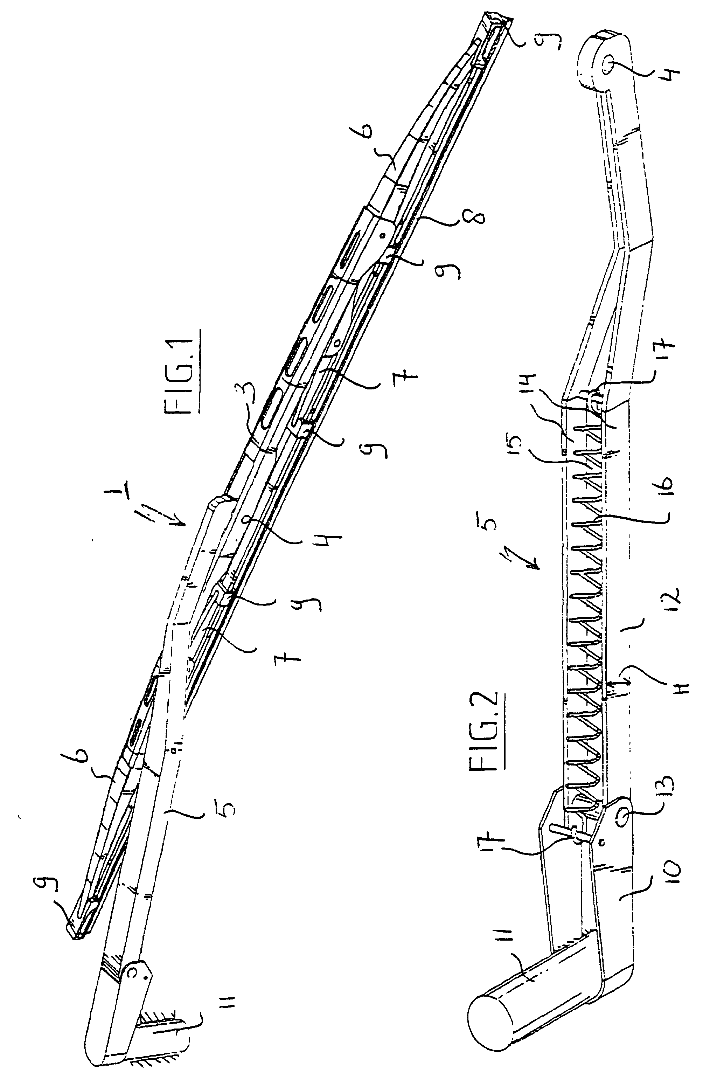

Figure 1 is a perspective view of the frame 2 used in the present windscreen wiper device 1, which frame includes a first yoke 3, which is pivotally connected to an oscillating arm 5 of a passenger car at the location of pivot pin 4. First yoke 3 functions as a carrier of two second yokes 6, which in turn function as carriers of two third yokes 7. All yokes are pivot-mounted in their respective carriers, so that a force exerted at the location of pivot pin 4 is distributed more or less evenly over the ends of third yokes 7, which are capable of transmitting said force to the rubber wiper blade 8. Wiper blade 8 is accommodated between claws 9 of the second and third yokes 6, 7 for that matter.

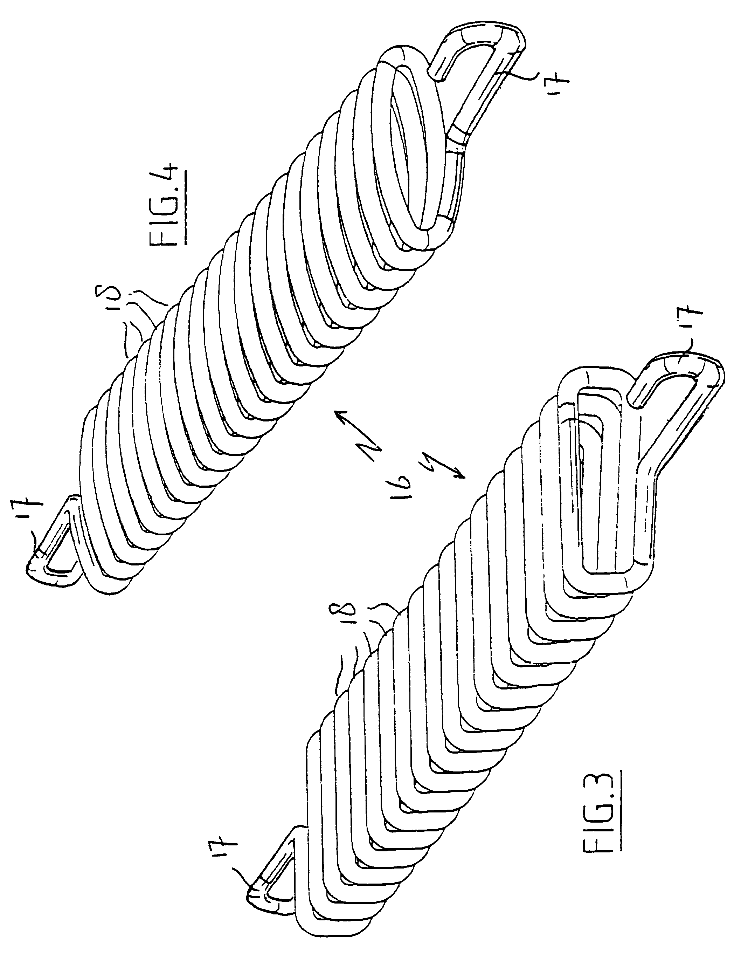

Figure 2 is a perspective view of the oscillating arm 5 of Figure 1, seen from the bottom side. Arm 5 is built up of a mounting part 10, which is schematically shown to be mounted on a rotary drive shaft 11 in this figure so as to impart an oscillating movement to arm 5, and also of a swivelling part 12, which is pivoted to mounting part 10 about a pivot pin 13 at its one end, and which can be connected to first yoke 3 at its other end. As Figure 2 shows, swivelling part 12 is made up of two upright side walls 14 and one back wall interconnecting the side walls 14. Swivelling part 12 is of U-shaped cross-section, therefore, so that a U-shaped channel is formed, which functions as a housing for a non-circular coil spring 16. Coil spring 16 is formed with hook means 17 at both ends, one of which engages mounting part 10, whilst the other engages swivelling part 12. The actual coil spring 16 and the hook means 17 are made in one piece for that matter, preferably of stainless steel or aluminum.

In order to be able to give swivelling part 12 the flattest possible shape, that is, the lowest possible height H, it has already been proposed, as already explained in the above, to use two smaller pressure springs lying side by side instead of one, large pressure spring. In particular because of the longer assembly time, but also because of the higher cost of production, this known alternative has appeared not to be very attractive in practice. In accordance with the invention it is proposed, therefore, to use a coil spring having windings which are "flatter" than the usual windings of circular cross-section, which is shown in Figure 2 and which is generally indicated by the term "non circular windings" herein.

Figures 3 and 4 are perspective views of special embodiments of the coil spring 16 of Figure 2, that is, coil springs having windings 18 of rectangular (Figure 3) or elliptical (Figure 4) cross-section. The cross-section is defined in both cases as having a length (largest dimension) varying between 8 to 30 mm and a width (smallest dimension) varying between 5 to 15 mm. In both cases the pitch of the windings 18 varies preferably between 1 to 4 mm.

## Claims

1. A windscreen wiper device (1) comprising an oscillating arm (5) and a frame (2) connected thereto for receiving a wiper blade (8), which arm (5) includes a mounting part (10) and a swivelling part (12) which is pivotally connected about a pivot axis (13) to the mounting part (10) at a first end and which is connected to the frame (2) at a second end, wherein at least one pressure spring is disposed in the swivelling part (12), which pressure spring engages both the swivelling part (12) and the mounting part (10), **characterized in that** the pressure spring is a coil spring (16) having non-circular windings (18).

2. A windscreen wiper device (1) according to claim 1, wherein said coil spring (16) is of substantially elliptical or rectangular cross-section.

3. A windscreen wiper device (1) according to claim 2, wherein the length of the substantially elliptical or rectangular cross-section varies between 8 to 30 mm, particularly between 10 to 20 mm, whereas its width varies between 5 to 15 mm, preferably between 7 to 10 mm.

4. A windscreen wiper device according to claim 1, 2 or 3, wherein said coil spring (16) is disposed in an internal channel of the swivelling part (12), which channel is of substantially U-shaped cross-section.

5. A windscreen wiper device (1) according to any one of the preceding claims 1 - 4, wherein said coil spring (16) includes hook means (17) formed in one piece therewith.

6. An oscillating arm (5) including a mounting part (10) and a swivelling part (12) which is pivotally connected about a pivot axis (13) to the mounting part (10) at a first end and wherein at least one pressure spring is disposed in the swivelling part (12), which pressure spring engages both the swivelling part (12) and the mounting part (10), and wherein the pressure spring is a coil spring (16) having non-circular windings, which is obviously suitable for use in a windscreen wiper device according to any one of the preceding claims 1 - 5.

7. A method of manufacturing a windscreen wiper device (1) according to any one of the preceding claims 1 - 5, wherein use is made of a pressure spring disposed in a swivelling part (12) of an oscillating arm (5), said pressure spring engaging both the swivelling part (12) and a mounting part (10) of the oscillating arm, wherein the pressure spring is a coil spring (16) having non-circular windings (18), preferably of substantially elliptical or rectangular cross-section, which functions as a pressure spring.

## Patentansprüche

1. Scheibenwischervorrichtung (1), die einen Schwingarm (5) und einen Rahmen (2) umfasst, der damit verbunden ist, um ein Wischerblatt (8) aufzunehmen, wobei der Arm (5) einen Anbringungsteil (10) und einen Schwenkteil (12) enthält, der an einem ersten Ende um eine Schwenkachse (13) schwenkbar mit dem Anbringungsteil (10) verbunden ist und an einem zweiten Ende mit dem Rahmen (2) verbunden ist, wobei wenigstens eine Druckfeder in dem Schwenkteil (12) angeordnet ist und die Druckfeder sowohl mit dem Schwenkteil (12) als auch dem Anbringungsteil (10) in Kontakt ist, **dadurch gekennzeichnet, dass** die Druckfeder eine Schraubenfeder (16) mit nicht kreisförmigen Bindungen (18) ist.

2. Scheibenwischervorrichtung (1) nach Anspruch 1, wobei die Schraubenfeder (16) im Wesentlichen elliptischen oder rechteckigen Querschnitt hat.

3. Scheibenwischervorrichtung (1) nach Anspruch 2, wobei die Länge des im Wesentlichen elliptischen oder rechteckigen Querschnitts zwischen 8 und 30 mm variiert, insbesondere zwischen 10 und 20 mm, während seine Breite zwischen 5 und 15 mm variiert, vorzugsweise zwischen 7 und 10 mm.

4. Scheibenwischervorrichtung nach Anspruch 1, 2 oder 3, wobei die Schraubenfeder (16) in einem inneren Kanal des Schwenkteils (12) angeordnet ist und der Kanal im Wesentlichen U-förmigen Querschnitt hat.

5. Scheibenwischervorrichtung (1) nach einem der vorangehenden Ansprüche 1 - 4, wobei die Schraubenfeder (16) eine Hakeneinrichtung (17) umfasst, die aus einem Stück damit ausgebildet ist.

6. Schwingarm (5), der einen Anbringungsteil (10) und einen Schwenkteil (12) enthält, der an einem ersten Ende um eine Schwenkachse (13) schwenkbar mit dem Anbringungsteil (10) verbunden ist, wobei wenigstens eine Druckfeder in dem Schwenkteil (12) angeordnet ist und die Druckfeder sowohl mit dem Schwenkteil (12) als auch dem Anbringungsteil (10) in Kontakt ist und die Druckfeder eine Schraubenfeder (16) mit nicht kreisförmigen Windungen ist, die offensichtlich für den Einsatz in einer Scheibenwischervorrichtung nach einem der vorangehenden Ansprüche 1 - 5 geeignet ist.

7. Verfahren zum Herstellen einer Scheibenwischervorrichtung (1) nach einem der vorangehenden Ansprüche 1 - 5, wobei eine Druckfeder verwendet wird, die in einem Schwenkteil (12) eines Schwingarms (5) angeordnet ist, und die Druckfeder sowohl mit dem Schwenkteil (12) als auch einem Anbringungsteil (10) des Schwingarms in Kontakt ist und die Druckfeder eine Schraubenfeder (16) mit nicht kreisförmigen Windungen (18), vorzugsweise mit elliptischem oder rechteckigem Querschnitt, ist, die als eine Druckfeder dient.

## Revendications

1. Dispositif essuie-glace (1) comprenant un bras oscillant (5) et un cadre (2) relié à celui-ci pour recevoir un balai d'essuie-glace (8), lequel bras (5) comprend une partie de montage (10) et une partie pivotante (12) qui est reliée de manière pivotante autour d'un axe de pivotement (13) à la partie de montage (10) au niveau d'une première extrémité, et qui est reliée au cadre (2) au niveau d'une seconde extrémité, dans lequel au moins un ressort de pression est disposé dans la partie pivotante (12), lequel ressort de pression entre en prise à la fois avec la partie pivotante (12) et avec la partie de montage (10), **caractérisé en ce que** le ressort de pression est un ressort à enroulement (16) présentant des enroulements non circulaires (18).

2. Dispositif essuie-glace (1) selon la revendication 1, dans lequel ledit ressort à enroulement (16) présente une coupe transversale sensiblement elliptique ou rectangulaire.

3. Dispositif essuie-glace (1) selon la revendication 2, dans lequel la longueur de la coupe transversale sensiblement elliptique ou rectangulaire va de 8 à 30 mm, plus particulièrement de 10 à 20 mm, tandis que sa largeur va de 5 à 15 mm, de préférence de 7 à 10 mm.

4. Dispositif essuie-glace selon la revendication 1, 2 ou 3, dans lequel ledit ressort à enroulement (16) est disposé dans un canal interne de la partie pivotante (12), lequel canal présente une coupe transversale sensiblement en forme de U.

5. Dispositif essuie-glace (1) selon l'une quelconque des revendications précédentes 1 à 4, dans lequel ledit ressort à enroulement (16) comprend des moyens formant crochet (17) formés d'une seule pièce avec celui-ci.

6. Bras oscillant (5) comprenant une partie de montage (10) et une partie pivotante (12) qui est reliée de manière pivotante autour d'un axe de pivotement (13) à la partie de montage (10) au niveau d'une première extrémité, et dans lequel au moins un ressort de pression est disposé dans la partie pivotante (12), lequel ressort de pression entre en prise à la fois avec la partie pivotante (12) et avec la partie de montage (10), et dans lequel le ressort de pression est un ressort à enroulement (16) présentant des enroulements non circulaires, qui est manifestement adapté pour une utilisation dans un dispositif essuie-glace selon l'une quelconque des revendications précédentes 1 à 5.

7. Procédé de fabrication d'un dispositif essuie-glace (1) selon l'une quelconque des revendications précédentes 1 à 5, dans lequel il est fait usage d'un ressort de pression disposé dans une partie pivotante (12) d'un bras oscillant (5), ledit ressort de pression entrant en prise à la fois avec la partie pivotante (12) et avec une partie de montage (10) du bras oscillant, dans lequel le ressort de pression est un ressort à enroulement (16) présentant des enroulements non circulaires (18), de préférence avec une coupe transversale sensiblement elliptique ou rectangulaire, qui fonctionne comme un ressort de pression.
